# EUROPEAN PATENT APPLICATION

(11) **EP 4 516 529 A1**
(43) Date of publication of application: **05.03.2025**
(21) Application number: 23194899.3
(22) Date of filing: 01.09.2023
(51) Int. Cl.: B41M 7/00, B41M 5/00, C09D 11/54

(54) **JETABLE NEUTRALIZING LIQUID TO PREVENT PRIMER SALT INTERACTION WITH VARNISH APPLICATION**

(71) Applicant: Canon Production Printing Holding B.V., 5914 HH Venlo (NL)
(72) Inventor: SCHELL, Jeroen A., Venlo (NL); JASPARS, Stan E. A., Venlo (NL)
(74) Representative: Canon Production Printing IP Department

(57) **Abstract**

The present invention relates to an ink-jet printing method, wherein a neutralizing liquid is applied before a varnish is applied on a printed image to neutralize salt ions in a primer, as well as an ink set and a kit of parts comprising such a neutralizing liquid and primer.

## Description

### FIELD OF THE INVENTION

The present invention relates to an ink-jet printing method, wherein a neutralizing liquid is applied before a varnish is applied on a printed image to neutralize salt ions in a primer, as well as an ink set and a kit of parts comprising such a neutralizing liquid and primer.

### BACKGROUND ART

In ink-jet printing, for many applications a primer is applied. Primer is applied (e.g. jetted) on paper to destabilize ink to obtain good IQ (image quality)-aspects, such as bleeding, gamut, etc. For this purpose, the primer usually includes a salt that destabilizes the ink. WO2022/128573 discloses a primer comprising a magnesium sulfate salt. This surface salt, however, also interacts with and destabilizes varnish, which is often applied on the primer and the ink layers afterwards for increased gloss. As a result, gloss of the printed product can be reduced.

Presently, this problem is solved by using low salt amounts in primer recipes, choosing high absorbing substrates and/or using low salt-sensitive varnishes. In addition, the amount of primer can be lowered to prevent the interaction. However, all of these means involve some disadvantages. While a reduced amount of salts may result in insufficient IQ-aspects, high absorbing substrates and/or low salt-sensitive varnishes are expensive, leading to increased cost in printing.

Therefore there is a need for an improved method of ink-jet printing method that can diminish or prevent loss of gloss due to salt interaction with the varnish.

### SUMMARY OF THE INVENTION

In contrast to the state of the art, the inventors found that by applying, e.g. jetting, a neutralizing liquid on top of the recording medium, e.g. an entire paper, cations present from the salt of the primer can be at least partly bound by a polyanion, such as polystyrene sulfonate. The bonding of cations, e.g. Mg²⁺-cations, can ensure low transfer to the varnish and prevents destabilization of the varnish. By a reduced varnish interaction, the gloss values of a varnish layer can be kept similar to parts where no salt is present. Therefore, gloss uniformity can be gained. By jetting, the amount of neutralizing liquid can be steered, and therefore the amount on low ink parts can be lowered and at low ink coverage the amount can be increased to compensate for surface salt amounts. Using the neutralizing liquid, a choice of varnish becomes independent of the presence of salt residues on the surface of the printed image. This way, the use of expensive ink and/or recording medium and/or primer and/or varnish can be avoided, and standard inks, recording media, primers and/or varnishes can be applied.

In a first aspect, the present invention relates to an ink-jet printing method, comprising applying a primer comprising at least one salt on at least one surface of a recording medium; printing an image with at least one ink on the surface of the recording medium on which the primer has been applied; and
applying a varnish on the image;
wherein a neutralizing liquid is applied on the recording medium with the printed image before the varnish is applied, the neutralizing liquid comprising at least one polyanion.

A second aspect of the invention relates to an ink set, comprising a primer comprising at least one salt; at least one ink; a neutralizing liquid; and a varnish, wherein the neutralizing liquid comprises at least one polyanion.

Furthermore disclosed is in a third aspect a kit of parts, comprising a primer comprising at least one salt; and a neutralizing liquid; wherein the neutralizing liquid comprises at least one polyanion.

Further aspects and embodiments of the invention are disclosed in the dependent claims and can be taken from the following description, figures and examples, without being limited thereto.

### BRIEF DESCRIPTION OF THE DRAWINGS

The present invention will become more fully understood from the detailed description given herein below and accompanying schematical drawings which are given by way of illustration only and are not limitative of the invention, and wherein:
Fig. 1 shows schematically a method in accordance with an embodiment of the invention.
Figs. 2 and 3 show results obtained in the present Examples.

### DETAILED DESCRIPTION

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually and appropriately detailed structure. In particular, features presented and described in separate dependent claims may be applied in combination and any combination of such claims are herewith disclosed.

Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language).

In the present specification, amounts of a substance are usually given as weight percent (wt%, % w/w), unless noted otherwise or clear from the context.

As used herein, the terms "comprises", "comprising", "contains", "containing", "includes", "including", "has", "having" or any other variation thereof, are intended to cover a non-exclusive inclusion. For example, a process, method, article, or apparatus that comprises a list of elements is not necessarily limited to only those elements, but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

According to a first aspect, the present invention relates to an ink-jet printing method, comprising
applying a primer comprising at least one salt on at least one surface of a recording medium;
printing an image with at least one ink on the surface of the recording medium on which the primer has been applied; and
applying a varnish on the image;
wherein a neutralizing liquid is applied on the recording medium with the printed image before the varnish is applied, the neutralizing liquid comprising at least one polyanion.

For the present method, it is clear that the primer is applied before the image is printed, and thereafter the neutralizing liquid is applied before the varnish is applied. While the order of these four steps in the ink-jet printing method is determined, it is not excluded that further steps are included in the ink-jet printing method before or after these steps and/or between two of these steps. Also, it is not excluded that one of these steps involves partial steps, like printing with several inks in order to make a color image.

### Primer application

In the present ink-jet printing method, applying a primer comprising at least one salt on at least one surface of a recording medium is not particularly restricted.

To improve the spreading and pinning (i.e. fixation of pigments and/or water-dispersed polymer particles) of the ink on the recording medium, in particular on slow absorbing media, such as machine coated media, the recording medium is pre-treated, i.e. treated prior to printing an image on the medium, with the primer. The pre-treatment step comprises the application of the primer and may further comprise one or more of the following:
- preheating of the receiving medium to enhance spreading of the used ink on the receiving medium and/or to enhance absorption of the used ink into the receiving medium;
- corona or plasma treatment.

### Primer pre-treatment

As an application way of the primer, any conventionally known methods can be used. Specific examples of an application way include: a roller coating, an ink-jet application, a curtain coating and a spray coating. There is no specific restriction in the number of times with which the primer is applied. It may be applied at one time, or it may be applied in two times or more. Application in two times or more may be preferable, since cockling of the coated printing paper can be prevented and the film formed by the primer will produce a uniform dry surface having no wrinkle by applying in 2 steps or more.

Especially a roller coating method can be used because this coating method does not need to take into consideration ejection properties and it can apply the primer homogeneously to a recording medium. In addition, the amount of the applied primer with a roller or with other means to a recording medium can be suitably adjusted by controlling: the physical properties of the primer; and the contact pressure of a roller in a roller coater to the recording medium and the rotational speed of a roller in a roller coater which is used for a coater of the primer. As an application area of the primer, it may be possible to apply only to the printed portion, or to the entire surface of both the printed portion and the non-printed portion. However, when the primer is applied only to the printed portion, unevenness may occur between the application area and a non-application area caused by swelling of cellulose contained in the coated printing paper with water in the primer followed by drying. Then, from the viewpoint of drying uniformly, it is preferable to apply the primer to the entire surface of a recording medium, and roller coating can be preferably used as a coating method to the whole surface. The primer may be an aqueous primer, as described further below. Image-wise primer is advantageous since the ink already can neutralize salt from the primer. Especially in low coverages of ink the neutralizing liquid is advantageous

### Corona or plasma treatment

Corona or plasma treatment may be used as a pre-treatment step by exposing a sheet of a recording medium to corona discharge or plasma treatment. In particular when used on media like polyethylene (PE) films, polypropylene (PP) films, polyetyleneterephtalate (PET) films and machine coated media, the adhesion and spreading of the ink can be improved by increasing the surface energy of the media. With machine coated media, the absorption of water can be promoted which may induce faster fixation of the image and less puddling on the receiving medium. Surface properties of the receiving medium may be tuned by using different gases or gas mixtures as medium in the corona or plasma treatment. Examples are air, oxygen, nitrogen, carbondioxide, methane, fluorine gas, argon, neon and mixtures thereof. Corona treatment in air is most preferred.

According to certain embodiments, the primer is essentially dried on the recording medium before the image is printed. An essential drying can be achieved if less than 5 wt.% of the solvents, e.g. water and/or cosolvents, of the primer remain on the recording medium after drying and prior to printing the printing image, e.g. less than wt.% or less than 1 wt.% of the solvents. According to certain embodiments, the primer is dried on the recording medium before the (first) ink for printing the printing image is applied. The drying can be carried out in any way and is not particularly limited. For example, drying can be achieved by heaters and/or radiators, e.g. IR radiators, applied in a printing apparatus at and/or after an application unit for the primer.

### Recording/Receiving media

Suitable recording media for use in a printing process using an ink or set of inks (e.g. Cyan, Magenta, Yellow and blacK, CMYK; OVG; etc.) according to the present invention are not particularly limited to any type. The receiving medium may be suitably selected depending on the intended application.

Suitable receiving media may range from strongly water absorbing media such as plain paper to non-water-absorbing media such as plastic sheets (for example PE, PP, PVC and PET films). To optimize print quality, inkjet coated media are known, which media comprise a highly water absorbing coating.

Further exemplified are Machine Coated (MC) media (also known as offset coated media) and glossy (coated) media. MC media are designed for use in conventional printing processes, for example offset printing and show good absorption characteristics with respect to solvents used in inks used in such printing processes, which are usually organic solvents.

MC and glossy media show inferior absorption behavior with respect to water (worse than plain paper, better than plastic sheets), and hence aqueous inks.

Machine coated or offset coated media comprise a base layer and a coating layer.

The base layer may be a sheet of paper mainly made of wood fibers or a non-woven fabric material comprising wood fibers combined with synthetic fibers. The base layer may be made of wood pulp or recycled paper pulp and may be bleached.

As an internal filler for the base, a conventional white pigment may be used. For example, the following substances may be used as a white pigment: an inorganic pigment such as precipitated calcium carbonate, heavy calcium carbonate, kaolin, clay, talc, calcium sulfate, barium sulfate, titanium dioxide, zinc oxide, zinc sulfide, zinc carbonate, satin white, aluminum silicate, diatomaceous earth, calcium silicate, magnesium silicate, synthetic silica, aluminum hydroxide, alumina, lithophone, zeolite, magnesium carbonate, or magnesium hydrate; and an organic pigment such as styrene plastic pigment, acrylic plastic pigment, polyethylene, microcapsule, urea resin, or melamine resin. These may be used alone or in combination.

As an internal sizing agent used when producing the base, a neutral rosin size used for neutral papermaking, alkenyl succinic anhydride (ASA), alkyl ketene dimer (AKD), or a petroleum resin size may be used. Especially, a neutral rosin size and alkenyl succinic anhydride are preferable. Alkyl ketene dimer has a high sizing effect and therefore provides an enough sizing effect with a small amount. However, since alkyl ketene dimer reduces the friction coefficient of the surface of recording paper (medium), recording paper made using alkyl ketene dimer may cause a slip when being conveyed in an ink jet recording apparatus.

The thickness of the base is not particularly limited and may be suitably selected in accordance with the intended use. It is, however, preferably 50 µm to 300 µm. The basis weight of the base is preferably 45 g/m² to 290 g/m².

The coating layer may comprise a (white) pigment, a binder and may further contain a surfactant and other components as required.

An inorganic pigment or a combination of an inorganic pigment and an organic pigment can be used as the pigment.

Examples of the inorganic pigment include kaolin, talc, calcium bicarbonate, light calcium carbonate, calcium sulfite, amorphous silica, titanium white, magnesium carbonate, titanium dioxide, aluminum hydroxide, calcium hydroxide, magnesium hydroxide, zinc hydroxide and chlorite. Among these, kaolin is particularly preferable due to its superior glossability. The addition amount of the kaolin is preferably 50 parts by mass or more with respect to 100 parts of the binder in the coating layer. When the amount of kaolin is less than 50 parts by mass, adequate effects are unable to be obtained with respect to glossiness.

Examples of the organic pigment include (aqueous) dispersions of, for example, styrene-acrylic copolymer particles, styrene-butadiene copolymer particles, polystyrene particles or polyethylene particles. These organic pigments may be used in combination. The addition amount of the organic pigment is preferably 2 parts by mass to 20 parts by mass with respect to 100 parts by mass of the total amount of the pigment in the coating layer. Since the organic pigment has superior glossability and the specific gravity thereof is small in comparison with inorganic pigment, it allows the obtaining of a coating layer having high bulk, high gloss and satisfactory surface coatability.

An aqueous resin may be used for the binder. At least one of a water-soluble resin and a water-dispersible resin may be used for the aqueous resin.

There are no particular limitations on the water-soluble resin, the water-soluble resin can be suitably selected according to the intended use. Examples thereof include polyvinyl alcohol and polyvinyl alcohol modification products such as anion-modified polyvinyl alcohol, cation-modified polyvinyl alcohol or acetal-modified polyvinyl alcohol; polyurethane; polyvinyl pyrrolidone and polyvinyl pyrrolidone modification products such as copolymers of polyvinyl pyrrolidone and vinyl acetate, copolymers of vinyl pyrrolidone and dimethylaminoethyl methacrylate, copolymers of quaternized vinyl pyrrolidone and dimethylaminoethyl methacrylate or copolymers of vinyl pyrrolidone and methacrylamide propyl trimethyl ammonium chloride; celluloses such as carboxymethyl cellulose, hydroxyethyl cellulose or hydroxypropyl cellulose; cellulose modification products such as cationized hydroxyethyl cellulose; synthetic resins such as polyester, polyacrylic acid (ester), melamine resin or modification products thereof or copolymers of polyester and polyurethane; and poly(meth)acrylic acid, poly(meth)acrylamide, oxidized starch, phosphoric acid-esterified starch, self-modifying starch, cationized starch, various types of modified starch, polyethylene oxide, sodium polyacrylate and sodium arginate. These water-soluble resins may be used alone or in combination.

There are no particular limitations on the water-dispersible resin, a water-dispersible resin can be suitably selected in accordance with the intended use, and examples thereof include polyvinyl acetate, ethylene-vinyl acetate copolymers, polystyrene, styrene-(meth)acrylic acid ester copolymers, (meth)acrylic acid ester copolymers, vinyl acetate-(meth)acrylic acid (ester) copolymers, styrene-butadiene copolymers, ethylene-propylene copolymers, polyvinyl ether and silicone-acrylic copolymers. In addition, a crosslinking agent such as methylolated melamine, methylolated urea, methylolated hydroxypropylene urea or isocyanate may also be contained, and the water-dispersible resin may self-crosslink with a copolymer containing a unit such as N-methylolacrylamide. A plurality of these aqueous resins can also be used simultaneously.

The addition amount of the aqueous resin is preferably 2 parts by mass to 100 parts by mass and more preferably 3 parts by mass to 50 parts by mass with respect to 100 parts by mass of the pigment. The amount of the aqueous resin is determined so that the liquid absorption properties of the recording media are within a desired range.

### Primer (also called pre-treatment liquid)

The primer is not particularly restricted as long as it contains at least one salt, preferably at least one multivalent cationic salt. The primer is particularly an aqueous primer, i.e. contains water, and may further contain at least one organic acid, e.g. dissolved in the water, one or more cosolvents, one or more surfactants, etc.

The at least one salt comprised in the primer is not particularly restricted. Furthermore, it is also not excluded that more than one salt is contained. However, according to certain embodiments only one salt is contained in the primer. In the primer, the at least one salt, particularly multivalent cationic salt is present to destabilize color pigments (normally having a negative charge at the pH of usual inks) during the printing process, thus leading to good printing properties. The at least one multivalent cationic salt is not particularly limited, and those usually used in primers for ink-jet printing can usually be applied. For example, useful cationic salts include water-soluble salts of magnesium, calcium, strontium, barium aluminum, copper, iron, nickel and zinc, particularly magnesium and calcium, particularly magnesium. According to certain embodiments, the primer comprises at least one multivalent cationic salt, particularly of magnesium, like magnesium sulfate, e.g. as heptahydrate. According to certain embodiments, the at least one salt is a magnesium salt.

Examples of organic acids that can be used in the primer include acetic acid, malonic acid, arginic acid, citric acid, amino acids like glycine and glutamic acid, succinic acid, tartaric acid, oxalic acid, fumaric acid, phthalic acid, maleic acid, and malic acid.

According to certain embodiments, at least one, e.g. one, salt, particularly multivalent cationic salt is contained in a concentration of 20 to 40 wt.%, e.g. 23 to 37 wt.%, e.g. 24 to 33 wt.%, with regard to the primer, i.e. 100 wt.% primer. It has been found that the use of the neutralizing liquid makes it possible that the printing process can withstand high salt concentrations due to the cations being at least partially neutralized before application of the varnish, making it possible to include the salt, e.g. multivalent cationic salt, in an amount that leads to particular improvement in the pre-treatment, leading to improved printing quality when printing an image.

As stated above, the primer can further comprise at least one cosolvent and/or at least one surfactant, e.g. for facilitating jetting. These are not particularly limited and can comprise those that are normally used in primers. Particularly, the co-solvent is compatible and miscible with water. Further, the surfactant is preferably water-soluble. According to certain embodiments, the co-solvent and/or surfactant can comprise those that are usually used in ink-jet printing inks, like the ones described below with regard to the ink used in the present printing method. An exemplary useful co-solvent comprises for example glycerol or other solvents that can help provide sufficient viscosity and/or surface tension to the primer so that it can spread evenly on the recording medium. Additionally, the one or more surfactant(s) can further help adjust the viscosity and/or surface tension of the primer.

Additionally, also further components can be comprised in the primer, e.g. additives that are usually used in pre-treatment, respectively priming, liquids in ink-jet printing, for example pH regulators to prevent corrosion of the printing equipment, amine additive, biocides, etc.

It is not excluded in the present invention that the primer is separated into two or more different portions.

### Printing step

The step of printing an image with at least one ink on the surface of the recording medium on which the primer has been applied is also not particularly restricted. As stated above, it is preferred that the recording medium on which the primer is applied is dried before the at least one ink is applied. While only an image with one ink may be applied, an image with at least two inks, e.g. two, three, and/or four inks can be printed on the recording medium. Suitable inks are described after possible embodiments of the printing step are described in detail.

Image formation is performed in such a manner that, employing an inkjet printer loaded with inkjet inks, ink droplets are ejected from inkjet heads based on the digital signals onto a recording medium.

Although both single pass inkjet printing and multi pass (i.e. scanning) inkjet printing may be used for image formation, single pass inkjet printing is preferably used since it is effective to perform high-speed printing. Single pass inkjet printing is an inkjet recording method with which ink droplets are deposited onto the receiving medium to form all pixels of the image by a single passage of a recording medium underneath an inkjet marking module. In image formation by ejecting an ink, an inkjet head (i.e. printhead) employed may be either an on-demand type or a continuous type inkjet head.

Optionally, the image formation may be carried out while the recording medium is temperature controlled. For this purpose, a temperature control device may be arranged to control the temperature of the surface of a transportation mechanism (e.g. belt or drum). The temperature control device may be used to control the surface temperature of the recording medium, for example in the range of 30°C to 60°C. The temperature control device may comprise heaters, such as radiation heaters, and a cooling means, for example a cold blast, in order to control the surface temperature of the receiving medium within said range.

### Drying and fixing

After an image has been formed on the receiving medium, the prints have to be dried and the image has to be fixed onto the receiving medium. Drying comprises generally the evaporation of solvents, in particular those solvents that have poor absorption characteristics with respect to the selected recording medium.

A drying and fixing unit for this purpose may comprise a heater, for example a radiation heater. After an image has been formed, the print is heated such that solvents present in the printed image, to a large extent water, evaporate. The speed of evaporation and hence drying may be enhanced by increasing the air refresh rate in the drying and fixing. Simultaneously, film formation of the ink occurs, because the prints are heated to a temperature above the minimum film formation temperature (MFT).

### Ink

An ink composition used in the ink in the present method is not particularly limited and can e.g. comprise a water-dispersible resin, a water-dispersible colorant, water, a cosolvent, a surfactant and optionally other additives. Preferably, the ink is water-based. In the ink, the amount of each component is not particularly limited as long as a printing ink is obtained. Particularly, the ink comprises a latex resin and/or a pigment.

### Water dispersible resin (Latex resin)

Examples of the water-dispersible resin include synthetic resins and natural polymer compounds. Examples of the synthetic resins include polyester resins, polyurethane resins, polyepoxy resins, polyamide resins, polyether resins, poly(meth)acrylic resins, acryl-silicone resins, fluorine-based resins, polyolefin resins, polystyrene-based resins, polybutadiene-based resins, polyvinyl acetate-based resins, polyvinyl alcohol-based resins, polyvinyl ester-based resins, polyvinyl chloride-based resins, polyacrylic acid-based resins, unsaturated carboxylic acid-based resins and copolymers such as styrene - acrylate copolymer resins, styrene-butadiene copolymer resins. Examples of the natural polymer compounds include celluloses, rosins, and natural rubbers.

Examples of commercially available water-dispersible resin emulsions include: Joncryl 537 and 7640 (styrene-acrylic resin emulsion, made by Johnson Polymer Co., Ltd.), Microgel E-1002 and E-5002 (styrene-acrylic resin emulsion, made by Nippon Paint Co., Ltd.), Voncoat 4001 (acrylic resin emulsion, made by Dainippon Ink and Chemicals Co., Ltd.), Voncoat 5454 (styrene-acrylic resin emulsion, made by Dainippon Ink and Chemicals Co., Ltd.), SAE-1014 (styrene-acrylic resin emulsion, made by Zeon Japan Co., Ltd.), Jurymer ET-410 (acrylic resin emulsion, made by Nihon Junyaku Co., Ltd.), Aron HD-5 and A-104 (acrylic resin emulsion, made by Toa Gosei Co., Ltd.), Saibinol SK-200 (acrylic resin emulsion, made by Saiden Chemical Industry Co., Ltd.), and Zaikthene L (acrylic resin emulsion, made by Sumitomo Seika Chemicals Co., Ltd.), acrylic copolymer emulsions of DSM Neoresins, e.g. the NeoCryl product line, in particular acrylic styrene copolymer emulsions NeoCryl A-662, NeoCryl A-1131, NeoCryl A-2091, NeoCryl A-550, NeoCryl BT-101, NeoCryl SR-270, NeoCryl XK-52, NeoCryl XK-39, NeoCryl A-1044, NeoCryl A-1049, NeoCryl A-1110, NeoCryl A-1120, NeoCryl A-1127, NeoCryl A-2092, NeoCryl A-2099, NeoCryl A-308, NeoCryl A-45, NeoCryl A-615, NeoCryl BT-24, NeoCryl BT-26, NeoCryl BT-26, NeoCryl XK-15, NeoCryl X-151, NeoCryl XK-232, NeoCryl XK-234, NeoCryl XK-237, NeoCryl XK-238-NeoCryl XK-86, NeoCryl XK-90 and NeoCryl XK-95 However, the water-dispersible resin emulsion is not limited to these examples.

The water-dispersible resin may be used in the form of a homopolymer, a copolymer or a composite resin, and all of water-dispersible resins having a monophase structure or core-shell structure and those prepared by power-feed emulsion polymerization may be used.

### Water-Dispersible Colorant

A water-dispersible colorant may be a pigment or a mixture of pigments, a dye or a mixture of dyes or a mixture comprising pigments and dyes, as long as the colorant is water-dispersible. The pigment is not particularly limited and may be suitably selected in accordance with the intended use.

Examples of the pigment usable include those commonly known without any limitation, and either a water-dispersible pigment or an oil-dispersible pigment is usable. For example, an organic pigment such as an insoluble pigment or a lake pigment, as well as an inorganic pigment such as carbon black, is preferably usable.

Examples of the insoluble pigments are not particularly limited, but preferred are an azo, azomethine, methine, diphenylmethane, triphenylmethane, quinacridone, anthraquinone, perylene, indigo, quinophthalone, isoindolinone, isoindoline, azine, oxazine, thiazine, dioxazine, thiazole, phthalocyanine, or diketopyrrolopyrrole dye.

For example, inorganic pigments and organic pigments for black and color inks are exemplified. These pigments may be used alone or in combination. As the inorganic pigments, it is possible to use carbon blacks produced by a known method such as a contact method, furnace method and thermal method, in addition to titanium oxide, iron oxide, calcium carbonate, barium sulfate, aluminum hydroxide, barium yellow, cadmium red and chrome yellow.

As the organic pigments, it is possible to use azo pigments (including azo lake, insoluble azo pigments, condensed pigments, chelate azo pigments and the like), polycyclic pigments (e.g., phthalocyanine pigments, perylene pigments, perynone pigments, anthraquinone pigments, quinacridone pigments, dioxazine pigments, indigo pigments, thioindigo pigments, isoindolinone pigments, and quinophthalone pigments), dye chelates (e.g., basic dye type chelates, and acidic dye type chelates), nitro pigments, nitroso pigments, aniline black. Among these, particularly, pigments having high affinity with water are preferably used.

Specific pigments which are preferably usable are listed below.

Examples of pigments for magenta or red include: C.I. Pigment Red 1, C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 17, C.I. Pigment Red 22, C.I. Pigment Red 23, C.I. Pigment Red 31, C.I. Pigment Red 38, C.I. Pigment Red 48:1, C.I. Pigment Red 48:2 (Permanent Red 2B(Ca)), C.I.Pigment Red 48:3, C.I.Pigment Red 48:4, C.I. Pigment Red 49:1, C.I. Pigment Red 52:2; C.I. Pigment Red 53:1, C.I. Pigment Red 57:1 (Brilliant Carmine 6B), C.I. Pigment Red 60:1, C.I. Pigment Red 63:1, C.I. Pigment Red 64:1, C.I. Pigment Red 81. C.I. Pigment Red 83, C.I. Pigment Red 88, C.I. Pigment Red 101(colcothar), C.I. Pigment Red 104, C.I. Pigment Red 106, C.I. Pigment Red 108 (Cadmium Red), C.I. Pigment Red 112, C.I. Pigment Red 114, C.I. Pigment Red 122 (Quinacridone Magenta), C.I. Pigment Red 123, C.I. Pigment Red 139, C.I. Pigment Red 44, C.I. Pigment Red 146, C.I. Pigment Red 149, C.I. Pigment Red 166, C.I. Pigment Red 168, C.I. Pigment Red 170, C.I. Pigment Red 172, C.I. Pigment Red 177, C.I. Pigment Red 178, C.I. Pigment Red 179, C.I. Pigment Red 185, C.I. Pigment Red 190, C.I. Pigment Red 193, C.I. Pigment Red 209, C.I.Pigment Red 219 and C.I.Pigment Red 222, C.I. Pigment Violet 1 (Rhodamine Lake), C.I. Pigment Violet 3, C.I Pigment Violet 5:1, C.I. Pigment Violet 16, C.I. Pigment Violet 19, C.I. Pigment Violet 23 and C.I. Pigment Violet 38.

Examples of pigments for orange or yellow include: C.I. Pigment Yellow 1, C.I. Pigment Yellow 3, C.I. Pigment Yellow 12, C.I. Pigment Yellow 13, C.I. Pigment Yellow 14, C.I. Pigment Yellow 15, C.I. Pigment Yellow 15:3, C.I. Pigment Yellow 17, C.I. Pigment Yellow 24, C.I. Pigment Yellow 34, C.I. Pigment Yellow 35, C.I. Pigment Yellow 37, C.I. Pigment Yellow 42 (yellow iron oxides), C.I. Pigment Yellow 53, C.I. Pigment Yellow 55, C.I. Pigment Yellow 74, C.I. Pigment Yellow 81, C.I. Pigment Yellow 83, C.I. Pigment Yellow 93, C.I. Pigment Yellow 94, C.I. Pigment Yellow 95, C.I. Pigment Yellow 97, C.I. Pigment Yellow 98, C.I. Pigment Yellow 100, C.I. Pigment Yellow 101, C.I. Pigment Yellow 104, C.I. Pigment Yellow 408, C.I. Pigment Yellow 109, C.I. Pigment Yellow 110, C.I. Pigment Yellow 117, C.I. Pigment Yellow 120, C.I. Pigment Yellow 128, C.I. Pigment Yellow 138, C.I. Pigment Yellow 150, C.I. Pigment Yellow 151, C.I. Pigment Yellow 153 and C.I. Pigment Yellow 183; C.I. Pigment Orange 5, C.I. Pigment Orange 13, C.I. Pigment Orange 16, C.I. Pigment Orange 17, C.I. Pigment Orange 31, C.I. Pigment Orange 34, C.I. Pigment Orange 36, C.I. Pigment Orange 43, and C.I. Pigment Orange 51.

Examples of pigments for green or cyan include: C.I. Pigment Blue 1, C.I. Pigment Blue 2, C.I. Pigment Blue 15, C.I. Pigment Blue 15:1, C.I. Pigment Blue 15:2, C.I. Pigment Blue 15:3 (Phthalocyanine Blue), C.I. Pigment Blue 16, C.I. Pigment Blue 17:1, C.I. Pigment Blue 56, C.I. Pigment Blue 60, C.I. Pigment Blue 63, C.I. Pigment Green 1, C.I. Pigment Green 4, C.I. Pigment Green 7, C.I. Pigment Green 8, C.I. Pigment Green 10, C.I. Pigment Green 17, C.I. Pigment Green 18 and C.I. Pigment Green 36.

In addition to the above pigments, when red, green, blue or intermediate colors are required, it is preferable that the following pigments are employed individually or in combination thereof. Examples of employable pigments include: C.I. Pigment Red 209, 224, 177, and 194, C.I. Pigment Orange 43, C.I. Vat Violet 3, C.I. Pigment Violet 19, 23, and 37, C.I. Pigment Green 36, and 7, C.I. Pigment Blue 15:6.

Further, examples of pigments for black include: C.I. Pigment Black 1, C.I. Pigment Black 6, C.I. Pigment Black 7 and C.I. Pigment Black 11. Specific examples of pigments for black color ink usable in the present invention include carbon blacks (e.g., furnace black, lamp black, acetylene black, and channel black); (C.I. Pigment Black 7) or metal-based pigments (e.g., copper, iron (C.I. Pigment Black 11), and titanium oxide; and organic pigments (e.g., aniline black (C.I. Pigment Black 1).

### Solvent

Water is cited as an environmentally friendly and hence desirable solvent.

### Cosolvent

As a cosolvent of the ink, for the purposes of improving the ejection property of the ink or adjusting the ink physical properties, the ink preferably contains a water soluble organic solvent in addition to water. There is no restriction in particular in the type of the water soluble organic solvent. Also, more than one cosolvent can be used in the ink used in the present invention.

Examples of the water-soluble organic solvent include polyhydric alcohols, polyhydric alcohol alkyl ethers, polyhydric alcohol aryl ethers, nitrogen-containing heterocyclic compounds, amides, amines, ammonium compounds, sulfur-containing compounds, propylene carbonate, and ethylene carbonate.

Examples of the solvent include: glycerin (also termed glycerol), propylene glycol, dipropylene glycol, tripropylene glycol, tetrapropylene glycol, polypropylene glycol, ethylene glycol, diethylene glycol, triethylene glycol, tetraethylene glycol, polyethylene glycols preferably having a molecular weight of between 200 gram/mol and 1000 gram/mol (e.g. PEG 200, PEG 400, PEG 600, PEG 800, PEG 1000), glycerol ethoxylate, petaerythritol ethoxylate, polyethylene glycol (di)methylethers preferably having a molecular weight of between 200 gram/mol and 1000 gram/mol, tri-methylol-propane, diglycerol (diglycerin), trimethylglycine (betaine), N-methylmorpholine N-oxide, decaglyserol, 1,4-butanediol, 1,3-butanediol, 1,2,6-hexanetriol, 2-pyrrolidinone, dimethylimidazolidinone, ethylene glycol mono-butyl ether, diethylene glycol monomethyl ether, diethylene glycol monoethyl ether, diethylene glycol mono-propyl ether, diethylene glycol mono-butyl ether, triethylene glycol monomethyl ether, triethylene glycol monoethyl ether, triethylene glycol mono-propyl ether, triethylene glycol mono-butyl ether, tetraethylene glycol monomethyl ether, tetraethylene glycol monoethyl ether, propylene glycol mono-butyl ether, dipropylene glycol monomethyl ether, dipropylene glycol monoethyl ether, dipropylene glycol monopropyl ether, diethylene glycol monobutyl ether, tripropylene glycol monomethyl ether, tripropylene glycol monoethyl ether, tripropylene glycol monopropyl ether, tripropylene glycol monobutyl ether, tetrapropylene glycol monomethyl ether, diethylene glycol diethyl ether, diethylene glycol dibutyl ether, triethylene glycol diethyl ether, triethylene glycol dibutyl ether, dipropylene glycol dibutyl ether, tri propylene glycol dibutyl ether, 3-methyl 2,4-pentanediol, diethyleneglycol-monoethyl ether acetate, 1,2-hexanediol, 1,2-pentanediol and 1,2-butanediol.

### Surfactants

It is preferable that the ink contains at least one surfactant in order to improve an ink ejection property and/or the wettability of the surface of a recording medium, and the image density and color saturation of the image formed and reducing white spots therein. Using surfactants, the surface tension, i.e. the dynamic surface tension as well as the static surface tension, can be adjusted.

Examples of surfactants are not specifically limited. The following can be cited.

Examples of the surfactant include nonionic surfactants, cationic surfactants, anionic surfactants, amphoteric surfactants, in particular betaine surfactants, and silicone surfactants.

Examples of a cationic surfactant include: aliphatic amine salts, aliphatic quarternary ammonium salts, benzalkonium salts, benzethonium chloride, pyridinium salts, imidazolinium salts.

Examples of an anionic surfactant include: polyoxyethylene alkylether acetic acid salts, dodecylbenzene sulfonic acid salts, lauric acid salts, and salts of polyoxyethylene alkylether sulfate, an aliphatic acid soap, an N-acyl-N-methyl glycin salt, an N-acyl-N-methyl-β-alanine salt, an N-acylglutamate, an acylated peptide, an alkylsulfonic acid salt, an alkylbezenesulfonic acid salt, an alkylnaphthalenesulfonic acid salt, a dialkylsulfo succinate (e.g. sodium dioctyl sulfosuccinate (DSS); alternative names: docusate sodium, Aerosol OT and AOT), alkylsulfo acetate, α-olefin sulfonate, N-acyl-methyl taurine, a sulfonated oil, a higher alcohol sulfate salt, a secondary higher alcohol sulfate salt, an alkyl ether sulfate, a secondary higher alcohol ethoxysulfate, a polyoxyethylene alkylphenyl ether sulfate, a monoglysulfate, an aliphatic acid alkylolamido sulfate salt, an alkyl ether phosphate salt and an alkyl phosphate salt.

Examples of an amphoteric surfactant include: a carboxybetaine type, a sulfobetaine type, an aminocarboxylate salt and an imidazolium betaine.

Examples of a nonionic surfactant include: polyoxyethylene alkylether, polyoxypropylene polyoxyethylene alkylether, a polyoxyethylene secondary alcohol ether, a polyoxyethylene alkylphenyl ether, a polyoxyethylene sterol ether, a polyoxyethylenelanolin derivative polyoxyethylene polyoxypropylene alkyl ether, polyoxyethylene alkylester, a polyoxyethyleneglycerine aliphatic acid ester, a polyoxyethylene castor oil, a hydrogenated castor oil, a polyoxyethylene sorbitol aliphatic acid ester, a polyethylene glycols aliphatic acid ester, an aliphatic acid monoglyceride, a polyglycerine aliphatic acid ester, a sorbitan aliphatic acid ester, polyoxyethylene sorbitan aliphatic ester, a propylene glycol aliphatic acid ester, a cane sugar aliphatic acid ester, an aliphatic acid alkanol amide, polyoxyethylene alkylamide, a polyoxyethylene aliphatic acid amide, a polyoxyethylene alkylamine, an alkylamine oxide, an acetyleneglycol, an ethoxylated acetylene glycol, acetylene alcohol.

Examples of the silicone surfactant include side-chain-modified polydimethylsiloxane, both-ends-modified polydimethylsiloxane, one-end-modified polydimethylsiloxane, and side-chain/both-ends-modified polydimethylsiloxane. Polyether-modified silicone surfactants having, as a modified group, a polyoxyethylene group or a polyoxyethylene polyoxypropylene group are particularly preferable because they exhibit excellent physical properties as water-based surfactants. The silicone surfactant may be suitably synthesized or commercial products may be used. Commercial products are readily available from BYK Chemie GmbH, Shin-Etsu Chemical Co., Ltd., TORAY Dow Corning Silicone Co., Ltd., Nihon Emulsion Co., Ltd., Kyoeisha Chemical Co., Ltd., or the like.

The polyether-modified silicone surfactant is not particularly limited and may be suitably selected in accordance with the intended use. As the polyether-modified silicone surfactant, commercial products may be used. Examples of the commercial products include KF-618, KF-642 and KF-643 (produced by Shin-Etsu Chemical Co., Ltd.); EMALEX-SS-5602 and SS-1906EX (produced by Nihon Emulsion Co., Ltd.); FZ-2105, FZ-2118, FZ-2154, FZ-2161, FZ-2162, FZ-2163 and FZ-2164 (produced by TORAY Dow Corning Silicone Co., Ltd.); and BYK-33, BYK 331, BYK 341, BYK 348, BYK 349, BYK 3455, BYK-387 (produced by BYK Chemie GmbH); Tegowet 240, Tegowet 245, Tegowet 250, Tegowet 260 (produced by Evonik); Silwet L-77 (produced by Sabic).

All surfactants mentioned in this section may be used solely, or they may be used in combination.

### Additives

The ink composition may optionally further contain additives like biocides or a penetrant, which is a compound that promotes absorption of the ink composition in the print medium, and the additives are not particularly limited and comprise those usually used in inks.

### Application of neutralizing liquid

After the image is printed, i.e. the ink is applied and optionally dried, a neutralizing liquid is applied on the recording medium with the printed image before the varnish is applied. However, the neutralizing liquid can also be applied without drying, i.e. in a wet-in-wet application. The neutralizing liquid comprising at least one polyanion. The application of the neutralizing liquid is not particularly restricted. According to certain embodiments, it is jetted onto the recording medium with the printed image at least in the area with the printed image, but can also be jetted onto the whole recording medium so that an even gloss with the varnish can be obtained afterwards. If primer is only applied to regions that are printed on, it is also possible to only apply the neutralizing liquid on the printed areas. The means for jetting are not particularly restricted.

### Neutralizing liquid

The neutralizing liquid is a liquid comprising at least a solvent and at least one polyanion. However, it can also contain further additives, e.g. at least one surfactant, the surfactant being not particularly restricted. Suitable surfactants can be chosen and used as in the primer and/or ink.

In the neutralizing liquid, the solvent is not particularly restricted, and also a mixture of two or more solvents may be used. Preferably, the solvent is aqueous, i.e. the neutralizing liquid comprises water as solvent. However, also co-solvents like glycerol can be obtained, e.g. for good jetting properties. According to certain embodiments, water is the sole solvent of the neutralizing liquid.

In the neutralizing liquid, one polyanion or more than one polyanions, e.g. two, three, four or more polyanions can be contained. However, preferably only one polyanion is contained for homogeneous coverage. The polyanion is not particularly restricted as long as it contains a polymeric group and an anionic group, i.e. has a negative charge. The polyanion here is a polyelectrolyte, i.e. a polymer that bears an electrolyte group, here a negative charge. The anionic group of the polyanion is not particularly restricted. Preferably, the anionic group is a carboxylate, carbonate, phosphonate, phosphate, sulfonate and/or sulfate group. According to certain embodiments, the at least one polyanion is a sulfonate polyanion and/or carboxylate polyanion, preferably a sulfonate polyanion. The polymeric part is not particularly restricted and can be based on a homopolymer or copolymer. Suitable polymer parts are preferably soluble or at least dispersible in water, and are based on e.g. poly(meth)acrylate, polystyrene, polyterephthalate, polyvinylalcohol, polyvinylacetate, polyacrylamide, etc. Suitable polyanions thus include, for example, polystyrene sulfonate (PSS). According to certain embodiments, the polyanion is polystyrene sulfonate. The molecular weight of the polyanion is not restricted. For jetting purposes, a not too high molecular weight is preferred. A preferred counterion for the polyanion is an alkali metal cation like Li⁺, Na⁺, K⁺, etc.; H⁺; or mixtures thereof.

The amount of the polyanion in the neutralizing liquid is not particularly restricted as long as it does not affect the application of the liquid, particularly a jettability thereof. According to certain embodiments, the polyanion is contained in an amount of 1 to 20 wt.%, e.g. between 2 and 15 wt.%, preferably between and including 4 and 9 wt.% based on the total weight of the neutralizing liquid. When the amount of the polyanion is too low, a sufficient neutralizing effect may not be obtained. When the amount of the polyanion is too high, application of the neutralizing liquid may be not sufficient.

Preparation of the neutralizing liquid is not particularly limited, and may include mixing of the at least one polyanion, the at least one solvent and optionally one or more additives like a detergent, or mixing a suspension or solution of the at least one solvent in a suitable further solvent - that may be the same as the at least one solvent of the neutralizing liquid or different but is preferably the same, (further) solvent, i.e. for thinning, and optionally one or more additives.

According to certain embodiments, the polyanion is applied with a coverage of between 2 and 12 ml/m², preferably between and including 2.5 and 10 ml/m². If the coverage is too low, an insufficient neutralization of the cation of the salt may occur, leading to reduced gloss. If the coverage is too high, this might lead to increased roughness and also a reduced gloss. The surface coverage can be calculated based on the weight of the neutralizing liquid.

### Application of varnish

The step of applying a varnish on the image is not particularly restricted. Like the neutralizing liquid, it can be jetted onto the recording medium with the printed image and the neutralized cations of the primer at least in the area with the printed image, but can also be jetted onto the whole recording medium so that an even gloss can be obtained. If primer is only applied to regions that are printed on, it is also possible to only apply the varnish on the printed areas. The means for applying, e.g. rod coating, roller coating, jetting, etc., are not particularly restricted.

### Varnish

In the present ink-jet printing method, the varnish is not restricted, and any varnish for increasing gloss and/or robustness may be used, particularly for increasing gloss.

The varnish particularly forms a transparent layer on the printed recording medium. As varnish, an aqueous solution comprising components capable of forming a transparent protective layer over a recording medium (e.g. a water-dispersible resin, a surfactant, water, and additives as required) is preferably used. The varnish thus is preferably water-based, and preferably contains a latex emulsion/water-dispersible resin emulsion, an alkali soluble polymer, or a combination of both. Preferably, these carry carboxylic acid groups. The water-dispersible resin comprised in the varnish preferably has a glass transition temperature (T_{g}) of -30°C or higher, and more preferably in the range of -20°C to 100°C. The minimum film forming temperature (MFT) of the water-dispersible resin is preferably 50°C or lower, and more preferably 35°C or lower. The water-dispersible resin may be radiation curable to improve the glossiness and fixability of the image. The water-dispersible resin and/or alkali soluble polymer can react with residual primer salt components, particularly when they carry acid groups, particularly carboxylic acid groups, which can lead to destabilizing these particles or creating a gel of the soluble polymer part, leading to roughness differences and/or reduced film-forming properties, causing gloss level reduction. Using the neutralizing liquid, reaction of salt components of the primer with varnish components can be reduced or even prevented. This provides an improved freedom of choice of a varnish composition.

As the water-dispersible resin, for example, an acrylic resin, a styrene-acrylic resin, a urethane resin, an acryl-silicone resin, a fluorine resin and the like may be used. The water-dispersible resin can be suitably selected from the same materials as that used for the inkjet ink. The amount of the water-dispersible resin contained, as a solid content, in the protective layer is preferably 1 wt.% to 50 wt.%. The surfactant comprised in the post-treatment liquid is not particularly limited and may be suitably selected from those used in the inkjet ink. Examples of the other components of the post-treatment liquid include antifungal agents, antifoaming agents, and pH adjustors.

### Further steps

While the present ink-jet printing method at least comprises the four steps of applying a primer, printing an image, applying a neutralizing liquid, and applying a varnish, further steps can be carried out in the present ink-jet printing method.

According to certain embodiments, a drying step is carried out after the neutralizing liquid is applied and before the varnish is applied. This enables faster application of the varnish. The drying is not particularly restricted and can be carried out like drying of the primer and/or ink.

Also, a drying step may be carried out similarly after varnish application. While drying steps may be implemented between each application step (primer - ink - neutralizing liquid - varnish), wet-in-wet processes are also covered in the present method, e.g. no drying takes place between primer and ink application and/or between ink and neutralizing liquid application. According to certain embodiments, a drying step is carried out at least before application of the varnish.

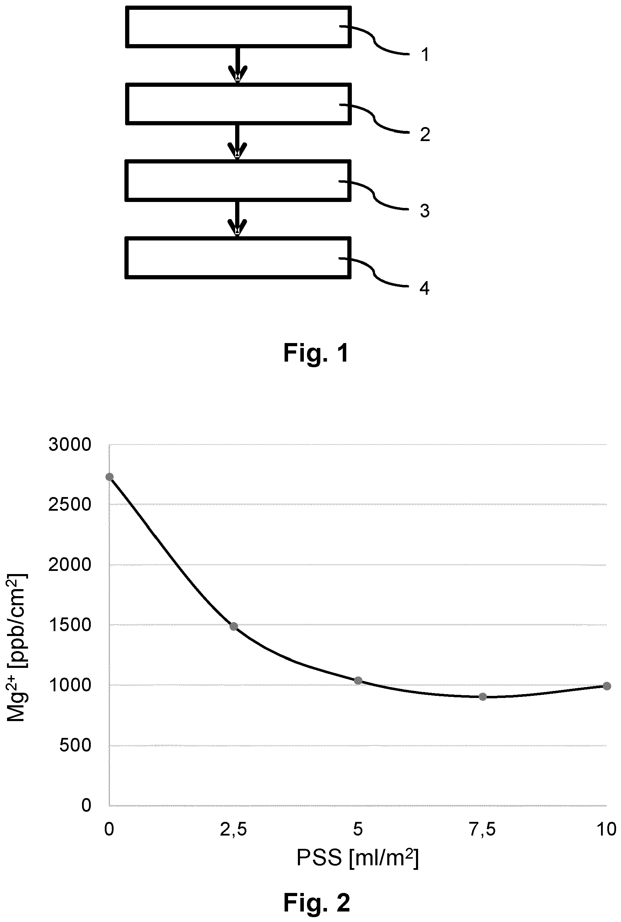

An exemplary ink-jet printing method of the invention is schematically shown in Fig. 1.

Following a step 1 of applying a primer comprising at least one salt on at least one surface of a recording medium a step 2 of printing an image with at least one ink on the surface of the recording medium on which the primer has been applied is carried out, followed by a step 3 of applying a neutralizing liquid on the recording medium with the printed image, wherein the neutralizing liquid comprises at least one polyanion. Thereafter a step 4 of applying a varnish on the image is carried out.

### Ink set

A second aspect of the invention relates to an ink set, comprising:
a primer comprising at least one salt;
at least one ink;
a neutralizing liquid; and
a varnish,
wherein the neutralizing liquid comprises at least one polyanion.

The ink set can be particularly used in the present ink-jet printing method. Thus, the primer, the at least one ink, the neutralizing liquid and the varnish particularly are those described with regard to the present ink-jet printing method, and reference is made to the above description of the respective components in the specification of the printing method.

### Kit of parts

Further disclosed is kit of parts, comprising:
a primer comprising at least one salt; and
a neutralizing liquid;
wherein the neutralizing liquid comprises at least one polyanion.

The primer and the neutralizing liquid are particularly the ones used in the ink set of the present invention, respectively in the present ink-jet printing method. Thus, reference is made to the ink set, respectively the present ink-jet printing method, for particular embodiments.

The above embodiments can be combined arbitrarily, if appropriate. Further possible embodiments and implementations of the invention comprise also combinations of features not explicitly mentioned in the foregoing or in the following with regard to the Examples of the invention. Particularly, a person skilled in the art will also add individual aspects as improvements or additions to the respective basic form of the invention.

### EXAMPLES

The present invention will now be described in detail with reference to several examples thereof. However, these examples are illustrative and do not limit the scope of the invention.

### Example 1

On a sheet of paper (Ensocoat 1CS 300 gsm) a primer, an ink, a neutralizing liquid and a varnish were applied, in this order. Between each step a drying took place.

The primer recipe is shown in Table 1:

**Table 1: Primer recipe**

| ingredient | Amount [% w/w] |
|---|---|
| Demiwater | 69.5 (balance) |
| MgSO₄*7H₂O | 25 |
| Glycerol | 5 |
| Surfactant | 0.5 |

A water based Canon CMYK ink has been used to print on top of the primer.

After drying, a neutralizing liquid is prepared by choosing a suitable polyanion, here polystyrene sulfonate, and jetted onto the printed and dried image. The mixture is prepared as described in Table 2:

**Table 2: Neutralizing liquid recipe**

| ingredient | Amount [% w/w] |
|---|---|
| Demiwater | balance |
| Polystyrene sulfonate (PSS), M_{w} ∼ 75 kDa | 6 or 9 |
| Surfactant | 0.5 |

A goal is to decrease the surface salt of the prints, and it is measured with an extraction method to simulate varnish behavior. A tube with demiwater is sealed with the top of a print. 10 very short extractions are performed by shaking the demiwater to the surface of the print. The demiwater is analysed for Mg²⁺-content using ion chromatography and is a measure of the surface salt content.

The surface salt content was analysed with jetting various amounts of neutralizing liquid on top of the primer + ink prints. As can be seen from Fig. 2, the surface salt Mg²⁺ decreases with increasing amount of neutralizing liquid, respectively the PSS therein.

In a further experimental series, carried out as above, after a further drying, a varnish (Actega AQ-440221) is applied on top of the resulting print with the neutralized Mg²⁺ ions from the primer. Varnish is applied via rod coating after printing on the printed paper (primer + ink + neutralizing liquid).

With varying amounts of neutralizing liquid, respectively coverage by the neutralizing liquid, the gloss of the printed paper after varnish application and drying is measured. The coverage was calculated from droplet measurements. Neutralizing liquid was jetted on a defined sheet of paper, from the mass difference the coverage could be calculated. Gloss measurements were done with a BYK micro-gloss Glossmeter (60° angle).

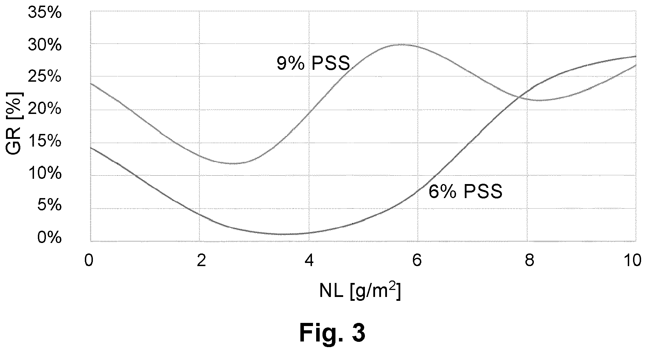

By reducing the surface salt amount, the reduction of gloss of a varnish is decreased as can be seen in Fig. 3, Fig. 3 showing the gloss reduction GR as function of neutralizing liquid coverage NL. At higher coverage, gloss again is reduced, due to increase in surface roughness.

## Claims

1. An ink-jet printing method, comprising
applying a primer comprising at least one salt on at least one surface of a recording medium;
printing an image with at least one ink on the surface of the recording medium on which the primer has been applied; and
applying a varnish on the image;
wherein a neutralizing liquid is applied on the recording medium with the printed image before the varnish is applied, the neutralizing liquid comprising at least one polyanion.

2. The ink-jet printing method of claim 1, wherein the at least one polyanion is a sulfonate polyanion.

3. The ink-jet printing method of claim 1 or 2, wherein the polyanion is contained in an amount of 1 to 20 wt.%, based on the total weight of the neutralizing liquid.

4. The ink-jet printing method of any one of the preceding claims, wherein the polyanion is applied with a coverage of between 2 and 12 ml/m².

5. The ink-jet printing method of any one of the preceding claims, wherein the at least one salt comprised in the primer is contained in an amount of 20 to 40 wt.%, based on the total weight of the primer.

6. The ink-jet printing method of any one of the preceding claims, wherein the at least one salt is a magnesium salt.

7. The ink-jet printing method of any one of the preceding claims, wherein a drying step is carried out after the neutralizing liquid is applied and before the varnish is applied.

8. The ink-jet printing method of any one of the preceding claims, wherein the neutralizing liquid comprises water as solvent.

9. An ink set, comprising:
a primer comprising at least one salt;
at least one ink;
a neutralizing liquid; and
a varnish,
wherein the neutralizing liquid comprises at least one polyanion.

10. A kit of parts, comprising:
a primer comprising at least one salt; and
a neutralizing liquid;
wherein the neutralizing liquid comprises at least one polyanion.
